# EUROPEAN PATENT APPLICATION

(11) **EP 4 672 380 A1**
(43) Date of publication of application: **31.12.2025**
(21) Application number: 24760204.8
(22) Date of filing: 14.02.2024
(51) Int. Cl.: H01M 4/62, C08G 73/10, H01M 4/13, H01M 50/403, H01M 50/414, H01M 50/434, H01M 50/443, H01M 50/446, H01M 50/451, H01M 50/46

(54) **POWER-STORAGE-DEVICE AQUEOUS BINDER SOLUTION, POWER-STORAGE-DEVICE SLURRY, POWER-STORAGE-DEVICE ELECTRODE, POWER-STORAGE-DEVICE SEPARATOR, POWER-STORAGE-DEVICE SEPARATOR/ELECTRODE STACK, AND POWER STORAGE DEVICE**

(30) Priority: 21.02.2023 JP 2023024944
(71) Applicant: Arakawa Chemical Industries, Ltd., Osaka-shi Osaka 541-0046 (JP)
(72) Inventor: SUGIMOTO Keisuke, Osaka-shi, Osaka 538-0053 (JP); SASAGAWA Naoki, Tsukuba-shi, Ibaraki 300-2611 (JP); TASAKI Takashi, Osaka-shi, Osaka 538-0053 (JP)
(74) Representative: Becker, Eberhard
(86) International application number: PCT/JP2024/004917
(87) International publication number: WO 2024/176902

(57) **Abstract**

Provided is a power-storage-device aqueous binder solution comprising a poly(amic acid) and water, in which the poly(amic acid) contains an aliphatic diamine unit and the poly(amic acid) is an amine salt.

## Description

### Technical Field

The disclosure relates to a power storage device binder aqueous solution, a power storage device slurry, a power storage device electrode, a power storage device separator, a power storage device separator/electrode laminate, and a power storage device.

### Related Art

The applicant is developing a power storage device binder that includes poly(meth)acrylamide.

### Related Art Documents

### Patent Documents

Patent Document 1: Japanese Patent Application Laid-Open No. 2018-006333

### SUMMARY OF INVENTION

### Problem to Be Solved by Invention

A problem to be solved by the present invention is to provide a power storage device binder aqueous solution having good adhesion and coatability.

### Means for Solving Problem

The disclosure provides the following items.

### (Item 1)

A power storage device binder aqueous solution including a polyamic acid and water, where
the polyamic acid includes an aliphatic diamine unit, and
the polyamic acid is an amine salt.

### (Item 2)

The power storage device binder aqueous solution according to the above item, where the polyamic acid includes a polyamine unit.

### (Item 3)

A power storage device slurry including a polyamic acid and water, and an electrode active material or a non-conductive particle, where
the polyamic acid includes an aliphatic diamine unit, and
the polyamic acid is an amine salt.

### (Item 4)

A power storage device electrode including a dried product of the power storage device slurry according to the above item on a current collector.

### (Item 5)

A power storage device separator including a dried product of the power storage device slurry according to the above item on a base material.

### (Item 6)

A power storage device separator/electrode laminate including a dried product of the power storage device slurry according to the above item on an active material side of an electrode.

### (Item 7)

A power storage device including one or more selected from the group consisting of: the power storage device electrode according to the above item; the power storage device separator according to the above item; and the power storage device separator/electrode laminate according to the above item.

### (Item A1)

The power storage device binder aqueous solution according to any one of the above items or the power storage device slurry according to any one of the above items, where a mass% content (the diamine unit/the polyamic acid) is 10 mass% to 70 mass%.

### (Item A2)

The power storage device binder aqueous solution according to any one of the above items or the power storage device slurry according to any one of the above items, where a mass% content (the diamine unit/the polyamic acid) is 15 mass% to 45 mass%.

### (Item A3)

The power storage device binder aqueous solution according to any one of the above items or the power storage device slurry according to any one of the above items, where a mol% content (the diamine unit/the polyamic acid) is 45 mol% to 56 mol%.

### (Item A4)

The power storage device binder aqueous solution according to any one of the above items or the power storage device slurry according to any one of the above items, where the aliphatic diamine unit is one or more selected from the group consisting of a diaminoalkylene unit and a diaminocycloalkylene unit.

### (Item A5)

The power storage device binder aqueous solution according to any one of the above items or the power storage device slurry according to any one of the above items, where the aliphatic diamine unit is a 1,3-bisaminomethylcyclohexane unit.

### (Item A6)

The power storage device binder aqueous solution according to any one of the above items or the power storage device slurry according to any one of the above items, where a mass% content (the aliphatic diamine unit/the polyamic acid) is 1 mass% to 55 mass%.

### (Item A7)

The power storage device binder aqueous solution according to any one of the above items or the power storage device slurry according to any one of the above items, where a mol% content (the aliphatic diamine unit/the polyamic acid) is 2 mol% to 56 mol%.

### (Item A8)

The power storage device binder aqueous solution according to any one of the above items or the power storage device slurry according to any one of the above items, where the tetracarboxylic acid dianhydride is one or more selected from the group consisting of 3,3',4,4'-benzophenone tetracarboxylic acid dianhydride, 3,3',4,4'-biphenyl tetracarboxylic acid anhydride, and 2,2-bis(3,4-dicarboxyphenyl)hexafluoropropane dianhydride.

### (Item A9)

The power storage device binder aqueous solution according to any one of the above items or the power storage device slurry according to any one of the above items, where the polyamine is diaminodialkylamine.

### (Item A10)

The power storage device binder aqueous solution according to any one of the above items or the power storage device slurry according to any one of the above items, where the polyamine is diaminodipropylamine.

### (Item A11)

The power storage device binder aqueous solution according to any one of the above items or the power storage device slurry according to any one of the above items, where a mass% content (polyamine unit/polyamic acid) is 0 mass% to 57 mass%.

### (Item A12)

The power storage device binder aqueous solution according to any one of the above items or the power storage device slurry according to any one of the above items, where a mol% content (polyamine unit/polyamic acid) is 0 mol% to 56 mol%.

### (Item A13)

The power storage device binder aqueous solution according to any one of the above items or the power storage device slurry according to any one of the above items, where the amine salt is one or more selected from the group consisting of trialkylamine salt, alkanolamine salt, imidazole salt, and diamine salt.

### (Item A14)

The power storage device binder aqueous solution according to any one of the above items or the power storage device slurry according to any one of the above items, where a boiling point (amine) is 120°C to 175°C.

In addition to the explicitly stated combinations, one or more of the above-described features may be further combined and provided.

### Effects of Invention

The power storage device binder aqueous solution of the disclosure exhibits good adhesion and coatability.

### EMBODIMENTS FOR IMPLEMENTING INVENTION

Throughout the disclosure, ranges of numerical values of various physical property values, contents, etc. may be appropriately set (e.g., selected from values described in each item below). Specifically, in the case where A3, A2, and A1 (where A3 > A2 > A1) are illustrated as a numerical value α, examples of the range of the numerical value α include A3 or less, A2 or less, less than A3, less than A2, A1 or more, A2 or more, greater than A1, greater than A2, A1 to A2 (A1 or more and A2 or less), A1 to A3, A2 to A3, A1 or more and less than A3, A1 or more and less than A2, A2 or more and less than A3, greater than A1 and less than A3, greater than A1 and less than A2, greater than A2 and less than A3, greater than A1 and A3 or less, greater than A1 and A2 or less, greater than A2 and A3 or less, etc.

As long as the problem to be solved by the present invention is resolved, components, conditions, numerical values, etc. are not particularly limited.

"αβ amount (A/B)" refers to β amount (α) of A with respect to B100α. α may be, for example, mass%, mol%, parts by mass, etc. β amount may be, for example, a content, a usage amount, etc. "Mass% content (A/B)" refers to a content (mass%) of A with respect to B100 mass%.

"γ ratio (A/B)" refers to γ ratio calculated according to formula "A ÷ B". γ ratio may be, for example, a mass ratio, a molar ratio, etc.

"Non-volatile content" refers to a total mass of components other than organic solvents and water. In an embodiment, "non-volatile content of A" refers to a total mass of components remaining at a time point at which 1 g of A is heated at 105°C until a constant mass is reached.

Examples of an alkyl group include linear alkyl groups, branched alkyl groups, cycloalkyl groups, etc.

Examples of linear alkyl groups include methyl group, ethyl group, n-propyl group, n-butyl group, n-pentyl group, n-hexyl group, n-heptyl group, n-octyl group, n-nonyl group, n-decyl group, etc.

"Branched alkyl group" refers to a group without a cyclic structure, in which at least one hydrogen atom of a linear alkyl group is substituted by an alkyl group.

Examples of branched alkyl groups include i-propyl group, diethylpentyl group, trimethylbutyl group, trimethylpentyl group, trimethylhexyl group, etc.

Examples of cycloalkyl groups include monocyclic cycloalkyl groups, crosslinked cyclic cycloalkyl groups, condensed cyclic cycloalkyl groups, etc. A group in which at least one hydrogen atom of a cycloalkyl group is substituted by an alkyl group is also taken as a cycloalkyl group.

"Monocyclic" refers to a cyclic structure formed by covalent bonding of carbons without a crosslinked structure therein. "Condensed cyclic" refers to a cyclic structure in which two or more monocycles share two atoms (i.e., sharing (condensing) only one edge of each ring with each other). "Crosslinked cyclic" refers to a cyclic structure in which two or more monocycles share three or more atoms.

Examples of monocyclic cycloalkyl groups include cyclopentyl group, cyclohexyl group, cycloheptyl group, cyclodecyl group, 3,5,5-trimethylcyclohexyl group, etc.

Examples of crosslinked cyclic cycloalkyl groups include tricyclodecyl group, adamantyl group, norbornyl group, etc.

The alkyl group also includes groups that combine linear alkyl groups, branched alkyl groups, and cycloalkyl groups. Examples of the combined groups include cycloalkylalkyl group and the like.

The cycloalkylalkyl group is represented by the following formula.

R^{calkyl}-R^{alkyl}-

(In the formula, R^{calkyl} represents a cycloalkyl group. R^{alkyl} represents an alkyl group.)

Examples of an alkylene group include linear alkylene groups, branched alkylene groups, cycloalkylene groups, etc.

Examples of linear alkylene groups include methylene group, ethylene group, propylene group, n-butylene group, n-pentylene group, n-hexylene group, n-heptylene group, n-octylene group, n-nonylene group, n-decamethylene group, etc.

Examples of branched alkylene groups include diethylpentylene group, trimethylbutylene group, trimethylpentylene group, trimethylhexylene group, etc.

Examples of cycloalkylene groups include monocyclic cycloalkylene groups, crosslinked cyclic cycloalkylene groups, condensed cyclic cycloalkylene groups, etc. In addition, the cycloalkylene group may also have one or more hydrogen atoms substituted by linear or branched alkyl groups.

Examples of monocyclic cycloalkylene groups include cyclopentylene group, cyclohexylene group, cycloheptylene group, cyclodecylene group, 3,5,5-trimethylcyclohexylene group, etc.

Examples of crosslinked cyclic cycloalkylene groups include tricyclodecylene group, adamantylene group, norbornylene group, etc.

Examples of condensed cyclic cycloalkylene groups include bicyclodecylene group and the like.

The alkylene group also includes groups that combine linear alkylene groups, branched alkylene groups, and cycloalkylene groups. Examples of the combined groups include cycloalkylenealkylene groups, alkylenecycloalkylenealkylene groups, etc.

The cycloalkylenealkylene group is represented by the following formula.

-R^{calkylene}-R^{alkylene}-

(In the formula, R^{calkylene} represents a cycloalkylene group. R^{alkylene} represents an alkylene group.)

The alkylenecycloalkylenealkylene group is represented by the following formula.

-R^{alkylene}-R^{calkylene}-R^{alkylene}-

(In the formula, R^{calkylene} represents a cycloalkylene group. R^{alkylene} represents an alkylene group.)

An aromatic group (aryl group, arylene group) may be substituted or unsubstituted. Examples of substituents of the aromatic group include alkyl group, thioalkyl group, thioaryl group, carbonylaryl group, etc.

Examples of an aryl group include monocyclic aryl groups, condensed cyclic aryl groups, etc.

Examples of monocyclic aryl groups include phenyl group, tolyl group, mesityl group, etc.

Examples of condensed cyclic aryl groups include naphthyl group and the like.

Examples of an arylene group include monocyclic arylene groups, condensed cyclic arylene groups, etc.

Examples of monocyclic arylene groups include phenylene group, tolylene group, etc.

Examples of condensed cyclic arylene groups include naphthylene groups and the like.

### [Power storage device binder aqueous solution]

The disclosure relates to a power storage device binder aqueous solution,
the power storage device binder aqueous solution including a polyamic acid and water, where
the polyamic acid includes an aliphatic diamine unit, and
the polyamic acid is an amine salt.

### <Polyamic acid>

The polyamic acid may be used alone or as a combination of two or more types.

### (Diamine unit)

The diamine may be used alone or as combination of two or more types.

Examples of a mass% content (diamine unit/polyamic acid) include 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, etc. In an embodiment, the content is preferably 10 mass% to 70 mass%.

Examples of a mol% content (diamine unit/polyamic acid) include 56 mol%, 55 mol%, 53 mol%, 51 mol%, 50 mol%, 49 mol%, 47 mol%, 45 mol%, etc. In an embodiment, the content is preferably 45 mol% to 56 mol%.

### • Aliphatic diamine

"Aliphatic diamine" refers to a diamine in which the portion excluding two amino groups (-NH₂) is an aliphatic group.

Examples of the aliphatic group includes alkyl group, alkylene group, alkenyl group, alkenylene group, alkynyl group, alkynylene group, etc.

Examples of the aliphatic diamine include diaminoalkylene, diaminocycloalkylene, etc. In an embodiment, the carbon number (aliphatic diamine) is preferably 2 to 9, and more preferably 3 to 9. Examples of reasons for the preference include prevention of turbidity generation and the like.

Examples of diaminoalkylene include ethylenediamine, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane, 1,12-diaminododecane, etc.

Examples of diaminocycloalkylene include diaminocyclohexane, diaminodicyclohexylmethane, 1,3-bisaminomethylcyclohexane, dimethyl-diaminodicyclohexylmethane, diaminobicyclo[2.2.1]heptane, bis(aminomethyl)-bicyclo[2.2.1]heptane, 3(4),8(9)-bis(aminomethyl)tricyclo[5.2.1.0^{2,6}]decane, isophoronediamine, 4,4'-diaminodicyclohexylmethane, 1,3-bisaminomethylcyclohexane, etc.

Examples of a mass% content (aliphatic diamine unit/polyamic acid) include 55 mass%, 50 mass%, 45 mass%, 40 mass%, 35 mass%, 30 mass%, 25 mass%, 20 mass%, 15 mass%, 10 mass%, 5 mass%, 1 mass%, etc. In an embodiment, the content is preferably 1 mass% to 55 mass%.

Examples of a mol% content (aliphatic diamine unit/polyamic acid) include 56 mol%, 55 mol%, 50 mol%, 45 mol%, 40 mol%, 35 mol%, 30 mol%, 25 mol%, 20 mol%, 15 mol%, 10 mol%, 5 mol%, 2 mol%, etc. In an embodiment, the content is preferably 2 mol% to 56 mol%.

### • Diamine other than aliphatic diamine: other diamine

In an embodiment, the polyamic acid may optionally include an other diamine unit. The "other diamine" may be used alone or as a combination of two or more types.

Examples of the other diamine include diaminopolysiloxane, bisaminophenoxyphenylpropane, diaminodiphenyl ether, phenylenediamine, diaminodiphenyl sulfide, diaminodiphenyl sulfone, diaminobenzophenone, diaminodiphenylmethane, diaminophenylpropane, diaminophenylhexafluoropropane, diaminophenylphenylethane, bisaminophenoxybenzene, bisaminobenzoylbenzene, bisaminodimethylbenzylbenzene, bisaminoditrifluoromethylbenzylbenzene, aminophenoxybiphenyl, aminophenoxyphenyl ketone, aminophenoxyphenyl sulfide, aminophenoxyphenyl sulfone, aminophenoxyphenyl ether, aminophenoxyphenylpropane, bis(aminophenoxybenzoyl)benzene, bis(aminophenoxy-α,α-dimethylbenzyl)benzene, bis[(aminoaryloxy)benzoyl]diphenyl ether, bis(amino-α,α-dimethylbenzylphenoxy)benzophenone, bis[amino-α,α-dimethylbenzylphenoxy]diphenyl sulfone, 4,4'-bis[aminophenoxyphenoxy]diphenyl sulfone, diaminodiaryloxybenzophenone, diaminoaryloxybenzophenone, 6,6'-bis(aminoaryloxy)-3,3,3',3'-tetramethyl-1,1'-spirobiindan, bis(aminoalkyl)ether, bis(aminoalkoxyalkyl)ether, bis(aminoalkoxy)alkane, bis[(aminoalkoxy)alkoxy]alkane, (poly)ethylene glycol bis(aminoalkyl)ether, bis(aminoaryloxy)pyridine, etc.

Examples of diaminopolysiloxane include α,ω-bis(2-aminoethyl)polydimethylsiloxane, α,ω-bis(3-aminopropyl)polydimethylsiloxane, α,ω-bis(4-aminobutyl)polydimethylsiloxane, α,ω-bis(5-aminopentyl)polydimethylsiloxane, α,ω-bis[3-(2-aminophenyl)propyl]polydimethylsiloxane, α,ω-bis[3-(4-aminophenyl)propyl]polydimethylsiloxane, 1,3-bis(3-aminopropyl)tetramethyldisiloxane, 1,3-bis(4-aminobutyl)tetramethyldisiloxane, etc.

Examples of bisaminophenoxyphenylpropane include 2,2-bis[4-(3-aminophenoxy)phenyl]propane, 2,2-bis[4-(4-aminophenoxy)phenyl]propane, etc.

Examples of diaminodiphenyl ether include 3,3'-diaminodiphenyl ether, 3,4'-diaminodiphenyl ether, 4,4'-diaminodiphenyl ether, etc.

Examples of phenylenediamine include phenylenediamine such as p-phenylenediamine, m-phenylenediamine, etc.

Examples of diaminodiphenyl sulfide include 3,3'-diaminodiphenyl sulfide, 3,4'-diaminodiphenyl sulfide, 4,4'-diaminodiphenyl sulfide, etc.

Examples of diaminodiphenyl sulfone include 3,3'-diaminodiphenyl sulfone, 3,4'-diaminodiphenyl sulfone, 4,4'-diaminodiphenyl sulfone, etc.

Examples of diaminobenzophenone include 3,3'-diaminobenzophenone, 4,4'-diaminobenzophenone, 3,4'-diaminobenzophenone, etc.

Examples of diaminodiphenylmethane include 3,3'-diaminodiphenylmethane, 4,4'-diaminodiphenylmethane, 3,4'-diaminodiphenylmethane, etc.

Examples of diaminophenylpropane include 2,2-di(3-aminophenyl)propane, 2,2-di(4-aminophenyl)propane, 2-(3-aminophenyl)-2-(4-aminophenyl)propane, etc.

Examples of diaminophenylhexafluoropropane include 2,2-di(3-aminophenyl)-1,1,1,3,3,3-hexafluoropropane, 2,2-di(4-aminophenyl)-1,1,1,3,3,3-hexafluoropropane, 2-(3-aminophenyl)-2-(4-aminophenyl)-1,1,1,3,3,3-hexafluoropropane, etc.

Examples of diaminophenylphenylethane include 1,1-di(3-aminophenyl)-1-phenylethane, 1,1-di(4-aminophenyl)-1-phenylethane, 1-(3-aminophenyl)-1-(4-aminophenyl)-1-phenylethane, etc.

Examples of bisaminophenoxybenzene include 1,3-bis(3-aminophenoxy)benzene, 1,3-bis(4-aminophenoxy)benzene, 1,4-bis(3-aminophenoxy)benzene, 1,4-bis(4-aminophenoxy)benzene, etc.

Examples of bisaminobenzoylbenzene include 1,3-bis(3-aminobenzoyl)benzene, 1,3-bis(4-aminobenzoyl)benzene, 1,4-bis(3-aminobenzoyl)benzene, 1,4-bis(4-aminobenzoyl)benzene, etc.

Examples of bisaminodimethylbenzylbenzene include 1,3-bis(3-amino-α,α-dimethylbenzyl)benzene, 1,3-bis(4-amino-α,α-dimethylbenzyl)benzene, 1,4-bis(3-amino-α,α-dimethylbenzyl)benzene, 1,4-bis(4-amino-α,α-dimethylbenzyl)benzene, etc.

Examples of bisaminoditrifluoromethylbenzylbenzene include 1,3-bis(3-amino-α,α-ditrifluoromethylbenzyl)benzene, 1,3-bis(4-amino-α,α-ditrifluoromethylbenzyl)benzene, 1,4-bis(3-amino-α,α-ditrifluoromethylbenzyl)benzene, 1,4-bis(4-amino-α,α-ditrifluoromethylbenzyl)benzene, etc.

Examples of aminophenoxybiphenyl include 2,6-bis(3-aminophenoxy)benzonitrile, 4,4'-bis(3-aminophenoxy)biphenyl, 4,4'-bis(4-aminophenoxy)biphenyl, etc.

Examples of aminophenoxyphenyl ketone include bis[4-(3-aminophenoxy)phenyl]ketone, bis[4-(4-aminophenoxy)phenyl]ketone, etc.

Examples of aminophenoxyphenyl sulfide include bis[4-(3-aminophenoxy)phenyl] sulfide, bis[4-(4-aminophenoxy)phenyl]sulfide, etc.

Examples of aminophenoxyphenyl sulfone include bis[4-(3-aminophenoxy)phenyl]sulfone, bis[4-(4-aminophenoxy)phenyl]sulfone, etc.

Examples of aminophenoxyphenyl ether include bis[4-(3-aminophenoxy)phenyl]ether, bis[4-(4-aminophenoxy)phenyl]ether, etc.

Examples of aminophenoxyphenylpropane include 2,2-bis[4-(3-aminophenoxy)phenyl]propane, 2,2-bis[3-(3-aminophenoxy)phenyl]-1,1,1,3,3,3-hexafluoropropane, 2,2-bis[4-(4-aminophenoxy)phenyl]-1,1,1,3,3,3-hexafluoropropane, etc.

Examples of bis(aminophenoxybenzoyl)benzene include 1,3-bis[4-(3-aminophenoxy)benzoyl]benzene, 1,3-bis[4-(4-aminophenoxy)benzoyl]benzene, 1,4-bis[4-(3-aminophenoxy)benzoyl]benzene, 1,4-bis[4-(4-aminophenoxy)benzoyl]benzene, etc.

Examples of bis(aminophenoxy-α,α-dimethylbenzyl)benzene include 1,3-bis[4-(3-aminophenoxy)-α,α-dimethylbenzyl]benzene, 1,3-bis[4-(4-aminophenoxy)-α,α-dimethylbenzyl]benzene, 1,4-bis[4-(3-aminophenoxy)-α,α-dimethylbenzyl]benzene, 1,4-bis[4-(4-aminophenoxy)-α,α-dimethylbenzyl]benzene, etc.

Examples of bis[(aminoaryloxy)benzoyl]diphenyl ether include 4,4'-bis[4-(4-aminophenoxy)benzoyl]diphenyl ether and the like.

Examples of bis(amino-α,α-dimethylbenzylphenoxy)benzophenone include 4,4'-bis[4-(4-amino-α,α-dimethylbenzyl)phenoxy]benzophenone and the like.

Examples of bis[amino-α,α-dimethylbenzylphenoxy]diphenyl sulfone include 4,4'-bis[4-(4-amino-α,α-dimethylbenzyl)phenoxy]diphenyl sulfone and the like.

Examples of 4,4'-bis[aminophenoxyphenoxy]diphenyl sulfone include 4,4'-bis[4-(4-aminophenoxy)phenoxy]diphenyl sulfone and the like.

Examples of diaminodiaryloxybenzophenone include 3,3'-diamino-4,4'-diphenoxybenzophenone, 3,3'-diamino-4,4'-dibiphenoxybenzophenone, etc.

Examples of diaminoaryloxybenzophenone include 3,3'-diamino-4-phenoxybenzophenone, 3,3'-diamino-4-biphenoxybenzophenone, etc.

Examples of 6,6'-bis(aminoaryloxy)-3,3,3',3'-tetramethyl-1,1'-spirobiindan include 6,6'-bis(3-aminophenoxy)-3,3,3',3'-tetramethyl-1,1'-spirobiindan, 6,6'-bis(4-aminophenoxy)-3,3,3',3'-tetramethyl-1,1'-spirobiindan, etc.

Examples of bis(aminoalkyl)ether include bis(aminomethyl)ether, bis(2-aminoethyl)ether, bis(3-aminopropyl)ether, etc.

Examples of bis(aminoalkoxyalkyl)ether include bis[2-(aminomethoxy)ethyl]ether, bis[2-(2-aminoethoxy)ethyl]ether, bis[2-(3-aminopropoxy)ethyl]ether, etc.

Examples of bis(aminoalkoxy)alkane include 1,2-bis(aminomethoxy)ethane, 1,2-bis(2-aminoethoxy)ethane, etc.

Examples of bis[(aminoalkoxy)alkoxy]alkane include 1,2-bis[2-(aminomethoxy)ethoxy]ethane, 1,2-bis[2-(2-aminoethoxy)ethoxy]ethane, etc.

Examples of (poly)ethylene glycol bis(aminoalkyl)ether include ethylene glycol bis(3-aminopropyl)ether, diethylene glycol bis(3-aminopropyl)ether, triethylene glycol bis(3-aminopropyl)ether, etc.

Examples of bis(aminoaryloxy)pyridine include 2,6-bis(3-aminophenoxy)pyridine and the like.

Examples of a mass% content (other diamine unit/polyamic acid) include 56 mass%, 55 mass%, 50 mass%, 45 mass%, 40 mass%, 35 mass%, 30 mass%, 25 mass%, 20 mass%, 15 mass%, 10 mass%, 5 mass%, 1 mass%, 0 mass%, etc. In an embodiment, the content is preferably 0 mass% to 56 mass%.

Examples of a mol% content (other diamine unit/polyamic acid) include 53 mol%, 50 mol%, 45 mol%, 40 mol%, 35 mol%, 30 mol%, 25 mol%, 20 mol%, 15 mol%, 10 mol%, 5 mol%, 1 mol%, 0 mol%, etc. In an embodiment, the content is preferably 0 mol% to 53 mol%.

### (Tetracarboxylic acid anhydride unit)

Tetracarboxylic acid anhydride may be used alone or as a combination of two or more types.

Examples of tetracarboxylic acid anhydride include 2,2',3,3'-biphenyl tetracarboxylic acid dianhydride, 2,3',3,4'-biphenyl tetracarboxylic acid dianhydride, 3,3',4,4'-biphenyl tetracarboxylic acid dianhydride, pyromellitic acid dianhydride, 1,2,3,4-benzene tetracarboxylic acid anhydride, 3,3',4,4'-diphenylsulfone tetracarboxylic acid dianhydride, 4,4'-oxydiphthalic acid anhydride, 4,4'-[propane-2,2-diylbis(1,4-phenyleneoxy)]diphthalic acid dianhydride, 2,2',3,3'-benzophenone tetracarboxylic acid dianhydride, 2,3,3',4'-benzophenone tetracarboxylic acid dianhydride, 3,3',4,4'-benzophenone tetracarboxylic acid dianhydride, 2,3',3,4'-diphenyl ether tetracarboxylic acid dianhydride, bis(2,3-dicarboxyphenyl)ether dianhydride, bis(2,3-dicarboxyphenyl)methane dianhydride, bis(3,4-dicarboxyphenyl)methane dianhydride, 1,1-bis(2,3-dicarboxyphenyl)ethane dianhydride, 1,1-bis(3,4-dicarboxyphenyl)ethane dianhydride, 2,2-bis(2,3-dicarboxyphenyl)propane dianhydride, 2,2-bis(3,4-dicarboxyphenyl)propane dianhydride, bis(2,3-dicarboxyphenoxyphenyl)sulfone dianhydride, bis(3,4-dicarboxyphenoxyphenyl)sulfone dianhydride, 1,4,5,8-naphthalene tetracarboxylic acid anhydride, 2,3,6,7-naphthalene tetracarboxylic acid anhydride, 2,3,6,7-anthracene tetracarboxylic acid dianhydride, 1,2,5,6-naphthalene tetracarboxylic acid dianhydride, 1,4,5,8-naphthalene tetracarboxylic acid dianhydride, 2,3,6,7-naphthalene tetracarboxylic acid dianhydride, 4,8-dimethyl-1,2,3,5,6,7-hexahydronaphthalene-1,2,5,6-tetracarboxylic acid dianhydride, 2,2-bis(3,4-dicarboxyphenyl)hexafluoropropane dianhydride, 2,2-bis(3,3',4,4'-tetracarboxyphenyl)tetrafluoropropane dianhydride, etc.

In an embodiment, the tetracarboxylic acid anhydride is preferably a compound represented by the following formula. 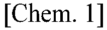 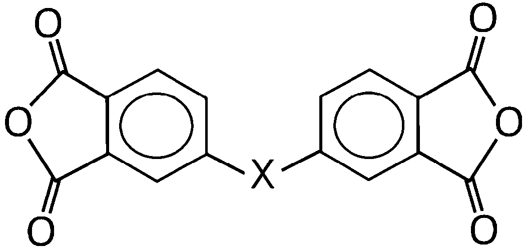 (In the formula, X represents a single bond, -SO₂-, -CO-, -O-, -O-C₆H₄-C(CH₃)₂-C₆H₄-O-, -C(CH₃)₂-, -O-C₆H₄-SO₂-C₆H₄-O-, -C(CHF₂)₂-, -C(CF₃)₂-, -COO-(CH₂)ₚ-OCO-, or -COO-H₂C-HC(-O-C(=O)-CH₃)-CH₂-OCO-. p represents an integer of 1 to 20.)

Examples of a mass% content (tetracarboxylic acid anhydride unit/polyamic acid) include 89 mass%, 85 mass%, 80 mass%, 75 mass%, 70 mass%, 65 mass%, 60 mass%, 55 mass%, 50 mass%, 45 mass%, 40 mass%, 35 mass%, 34 mass%, etc. In an embodiment, the content is preferably 34 mass% to 89 mass%.

Examples of a mol% content (tetracarboxylic acid anhydride unit/polyamic acid) include 55 mol%, 53 mol%, 51 mol%, 50 mol%, 49 mol%, 47 mol%, 45 mol%, 44 mol%, etc. In an embodiment, the content is preferably 44 mol% to 55 mol%.

### (Polyamine unit)

In an embodiment, the polyamic acid may optionally include a polyamine unit. The polyamine may be used alone or as a combination of two or more types.

"Polyamine" refers to an amine having three or more amino groups.

In an embodiment, the polyamine is preferably triamine, and more preferably diaminodialkylamine.

In an embodiment, the diaminodialkylamine is represented by the following formula.

H₂N-R^{dd1}-NH-R^{dd2}-NH₂

(In the formula, R^{dd1} and R^{dd2} represent alkylene groups. R^{dd1} and R^{dd2} are the same group or different groups.)

Examples of the diaminodialkylamine include diaminodiethylamine, diaminodipropylamine, diaminodibutylamine, diaminodipentylamine, diaminodihexylamine, spermidine, etc.

Examples of polyamine other than the above include triethylenetetraamine, tripropylenetetramine, tetraethylenepentamine, pentaethyleneheptamine, pentaethyleneheptamine, spermine, etc.

Examples of a mass% content (polyamine unit/polyamic acid) include 57 mass%, 55 mass%, 50 mass%, 45 mass%, 40 mass%, 35 mass%, 30 mass%, 25 mass%, 20 mass%, 15 mass%, 10 mass%, 5 mass%, 1 mass%, 0 mass%, etc. In an embodiment, the content is preferably 0 mass% to 57 mass%.

Examples of a mol% content (polyamine unit/polyamic acid) include 56 mol%, 55 mol%, 50 mol%, 45 mol%, 40 mol%, 35 mol%, 30 mol%, 25 mol%, 20 mol%, 15 mol%, 10 mol%, 5 mol%, 1 mol%, 0 mol%, etc. In an embodiment, the content is preferably 0 mol% to 56 mol%.

### (Monomer that is none of the above: other monomer)

The polyamic acid may optionally include a monomer unit (other monomer) that is none of the above. The "other monomer" may be used alone or as a combination of two or more types.

Examples of the other monomer include a tricarboxylic acid anhydride unit, a dicarboxylic acid anhydride unit, etc.

Examples of a mass% content (other monomer unit/polyamic acid) include less than 10 mass%, less than 9 mass%, less than 7 mass%, less than 5 mass%, less than 4 mass%, less than 2 mass%, less than 1 mass%, less than 0.9 mass%, less than 0.7 mass%, less than 0.5 mass%, less than 0.4 mass%, less than 0.2 mass%, less than 0.1 mass%, 0 mass%, etc. In an embodiment, the content is preferably less than 10 mass%, more preferably less than 5 mass%, even more preferably less than 1 mass%, and particularly preferably 0 mass%.

Examples of a mol% content (other monomer unit/polyamic acid) include less than 10 mol%, less than 9 mol%, less than 7 mol%, less than 5 mol%, less than 4 mol%, less than 3 mol%, less than 2 mol%, less than 1 mol%, and 0 mol%. In an embodiment, the content is preferably less than 10 mol%, more preferably less than 5 mol%, even more preferably less than 1 mol%, and particularly preferably 0 mol%.

### (Amine salt)

The amine may be used alone or as a combination of two or more types.

Examples of the amine salt include trialkylamine salt, alkanolamine salt, imidazole salt, diamine salt, etc.

Examples of trialkylamine salt include trimethylamine salt, triethylamine salt, tripropylamine salt, tributylamine salt, dimethylcyclohexylamine salt, etc.

Examples of alkanolamine salt include ethanolamine salt, diethanolamine salt, triethanolamine salt, etc.

Examples of ethanolamine salt include ethanoldimethylamine salt, ethanoldiethylamine salt, ethanoldipropylamine salt, ethanoldibutylamine salt, etc.

Examples of imidazole salt include imidazole salt, dimethylimidazole salt, etc.

Examples of diamine salt include tetramethylethylenediamine salt, tetramethylpropylenediamine salt, tetramethylbutylenediamine salt, etc.

Examples of a boiling point (amine) include 175°C, 170°C, 165°C, 160°C, 155°C, 150°C, 145°C, 140°C, 135°C, 130°C, 125°C, 120°C, etc. In an embodiment, the boiling point is preferably 120°C to 175°C. Examples of reasons for the preference include improvement of thermal decomposition temperature of a binder cured product, and the like.

In an embodiment, the amine salt is preferably a non-cyclic amine salt. "Non-cyclic amine" refers to an amine in which nitrogen is not a ring-constituting atom. For example, dimethylcyclohexylamine is a non-cyclic amine.

In an embodiment, examples of a mol% content (amine/carboxyl group (-COOH) of polyamic acid) include 200 mol%, 175 mol%, 150 mol%, 125 mol%, 100 mol%, 75 mol%, 50 mol%, 30 mol%, etc. In an embodiment, the content is preferably 30 mol% to 200 mol%, more preferably 50 mol% to 150 mol%, and even more preferably 100 mol% to 150 mol%.

### <Manufacturing method (polyamic acid)>

Manufacturing (polyamic acid) may be carried out by heating, in water, a compound group including the aliphatic diamine and the tetracarboxylic acid anhydride and, as necessary, other diamine, diaminodialkylamine, and other monomer. The amine salt may be added at one or more timings among any of before manufacturing of the polyamic acid, during manufacturing of the polyamic acid, and after manufacturing of the polyamic acid.

In an embodiment, a reaction temperature is preferably 20°C to 90°C.

In an embodiment, a reaction time is preferably 0.01 hours to 10 hours.

### <Physical properties (polyamic acid), etc.>

Examples of a number average molecular weight (polyamic acid: Mn) include 500000, 450000, 400000, 350000, 300000, 250000, 200000, 150000, 100000, 90000, 70000, 50000, 40000, 30000, 20000, 10000, 9000, 8000, 7000, 6000, 5000, 4000, 3000, 2000, etc. In an embodiment, the number average molecular weight is preferably 2000 to 500000.

Measurement conditions (number average molecular weight) include the following conditions and the like.
- Measurement instrument: GPC, manufactured by Tosoh Corporation (model number: HLC-8220)
- Column: TSKgel guardcolumn PW_{XL}, TSK-GEL G4000, TSK-GEL α-M (all manufactured by Tosoh Corporation)
- Eluent: 0.2M NaNO₃ 50mM phosphate buffer/acetonitrile = 90/10 (v/v) aqueous solution
- Column temperature: 40°C
- Calibration curve: standard polyethylene oxide-polyethylene glycol
- Measurement method: dissolving in the eluent such that a concentration of the polyamic acid aqueous solution becomes 0.10 mass%, and measuring after filter filtration.

Examples of a type B viscosity (power storage device binder aqueous solution) include 20000 mPa•s, 17500 mPa•s, 15000 mPa•s, 12500 mPa•s, 10000 mPa•s, 9000 mPa•s, 7500 mPa•s, 5000 mPa•s, 4500 mPa•s, 4000 mPa•s, 3500 mPa•s, 3000 mPa•s, 2500 mPa•s, 2000 mPa•s, 1500 mPa•s, 1000 mPa•s, 500 mPa•s, 200 mPa•s, 100 mPa•s, 50 mPa•s, 10 mPa•s, etc. In an embodiment, the type B viscosity is preferably 10 mPa•s to 20000 mPa•s.

Measurement conditions (type B viscosity) include the following conditions.
Solid content concentration: 15 mass%
Measurement temperature: 25°C
Type B viscometer: product name "Type B Viscometer Model TVB-10" manufactured by Toki Sangyo Co., Ltd.
Viscosity 10 mPa•s to 10000 mPa•s: No. 3 rotor, rotational speed 12 rpm
Viscosity exceeding 10000 mPa•s to 20000 mPa•s: No. 3 rotor, rotational speed 6 rpm
Viscosity exceeding 20000 mPa•s to 100000 mPa•s: No. 4 rotor, rotational speed 6 rpm

Examples of a glass transition temperature (polyamic acid) include 350°C, 325°C, 300°C, 275°C, 250°C, 225°C, 200°C, 180°C, etc. In an embodiment, the glass transition temperature (polyamic acid) is preferably 180°C or higher, and more preferably 180°C to 350°C.

The glass transition temperature may be measured according to DSC (differential scanning calorimetry), DTA (differential thermal analysis), TMA (thermomechanical analysis), etc.
Measurement conditions (glass transition temperature) include the following conditions.
Temperature range: -100°C to 300°C
Heating rate: 10°C/min

Examples of a mass% content (polyamic acid/power storage device binder aqueous solution) include 25 mass%, 20 mass%, 19 mass%, 15 mass%, 14 mass%, 12 mass%, 10 mass%, 9 mass%, 7 mass%, 6 mass%, 5 mass%, 4 mass%, 3 mass%, 2 mass%, 1 mass%, etc. In an embodiment, the content is preferably 1 mass% to 25 mass%.

### <Water>

Examples of water include ultrapure water, pure water, distilled water, ion-exchanged water, tap water, etc.

Examples of a mass% content (water/power storage device binder aqueous solution) include 99 mass%, 95 mass%, 90 mass%, 85 mass%, 80 mass%, 75 mass%, etc. In an embodiment, the content is preferably 75 mass% to 99 mass%.

Examples of a mass ratio (polyamic acid/water) include 0.33, 0.30, 0.25, 0.24, 0.22, 0.20, 0.18, 0.15, 0.12, 0.10, 0.09, 0.07, 0.05, etc. In an embodiment, the mass ratio is preferably 0.05 to 0.33.

### <Other binder>

In an embodiment, the power storage device binder aqueous solution may optionally include a binder other than the polyamic acid (other binder). The "other binder" may be used alone or as a combination of two or more types.

Examples of the other binder include diene-based copolymer, fluorine-based copolymer, copolymer other than the above, etc.

Examples of diene-based copolymer include styrene-butadiene-based copolymer, polybutadiene-based polymer, acrylonitrile-butadiene-based copolymer, methyl methacrylate-butadiene-based copolymer, carboxy-modified styrene-butadiene copolymer, etc.

Examples of fluorine-based copolymer include polyvinylidene fluoride (PVDF), polytetrafluoroethylene (PTFE), tetrafluoroethylene-hexafluoropropylene copolymer (FEP), tetrafluoroethylene-perfluoroalkyl vinyl ether copolymer (PFA), ethylene-tetrafluoroethylene copolymer (ETFE), etc.

Examples of copolymer other than the above include polyurethane-based polymer, poly(meth)acrylate-based polymer, vinyl chloride-based polymer, vinyl acetate-based polymer, vinyl acetate-ethylene-based copolymer, polyethylene, polypropylene, polyethylene terephthalate, polystyrene-based polymer, poly(meth)acrylamide, etc.

Examples of a mass part content (other binder/polyamic acid) include 100 parts by mass, 95 parts by mass, 90 parts by mass, 85 parts by mass, 80 parts by mass, 75 parts by mass, 70 parts by mass, 65 parts by mass, 60 parts by mass, 55 parts by mass, 50 parts by mass, 45 parts by mass, 40 parts by mass, 35 parts by mass, 30 parts by mass, 25 parts by mass, 20 parts by mass, 19 parts by mass, 17 parts by mass, 15 parts by mass, 13 parts by mass, 10 parts by mass, 9 parts by mass, 7 parts by mass, 5 parts by mass, 4 parts by mass, 2 parts by mass, 1 part by mass, 0 parts by mass, etc. In an embodiment, the content is preferably 0 parts by mass to 100 parts by mass.

### <Dispersion (emulsion)>

In an embodiment, the power storage device binder aqueous solution may optionally include a dispersion (emulsion). The dispersion (emulsion) may be used alone or as a combination of two or more types.

Examples of the dispersion (emulsion) include styrene-butadiene-based copolymer latex, polystyrene-based polymer latex, polybutadiene-based polymer latex, acrylonitrile-butadiene-based copolymer latex, polyurethane-based polymer latex, polymethyl methacrylate-based polymer latex, methyl methacrylate-butadiene-based copolymer latex, polyacrylate-based polymer latex, vinyl chloride-based polymer latex, vinyl acetate-based polymer emulsion, vinyl acetate-ethylene-based copolymer emulsion, polyethylene emulsion, carboxy-modified styrene butadiene copolymer resin emulsion, acrylic resin emulsion, polyethylene, polypropylene, polyethylene terephthalate, alginic acid and/or a salt thereof, polyvinylidene fluoride (PVDF), polytetrafluoroethylene (PTFE), tetrafluoroethylene-hexafluoropropylene copolymer (FEP), tetrafluoroethylene-perfluoroalkyl vinyl ether copolymer (PFA), ethylene-tetrafluoroethylene copolymer (ETFE), etc.

Examples of a mass part content (dispersion (emulsion)/polyamic acid) include 100 parts by mass, 95 parts by mass, 90 parts by mass, 85 parts by mass, 80 parts by mass, 75 parts by mass, 70 parts by mass, 65 parts by mass, 60 parts by mass, 55 parts by mass, 50 parts by mass, 45 parts by mass, 40 parts by mass, 35 parts by mass, 30 parts by mass, 25 parts by mass, 20 parts by mass, 19 parts by mass, 17 parts by mass, 15 parts by mass, 13 parts by mass, 10 parts by mass, 9 parts by mass, 7 parts by mass, 5 parts by mass, 4 parts by mass, 2 parts by mass, 1 part by mass, 0 parts by mass, etc. In an embodiment, the content is preferably 0 parts by mass to 100 parts by mass.

### <Thickener>

In an embodiment, the power storage device binder aqueous solution may optionally include a thickener. The thickener may be used alone or as a combination of two or more types.

Examples of a thickener include cellulose-based polymer and/or a salt thereof, polyvinyl alcohols, (modified) poly(meth)acrylic acid and/or a salt thereof, polyethylene glycol, polyethylene oxide, polyvinylpyrrolidone, oxidized starch, phosphoric acid starch, casein, modified starch, acrylonitrile-butadiene copolymer hydride, etc.

Examples of cellulose-based polymer and/or a salt thereof include carboxymethyl cellulose, methyl cellulose, hydroxypropyl cellulose, etc.

Examples of polyvinyl alcohols include copolymer of (anhydrous) maleic acid and/or fumaric acid with vinyl alcohol, and the like.

Examples of a mass part content (thickener/polyamic acid) include 100 parts by mass, 95 parts by mass, 90 parts by mass, 85 parts by mass, 80 parts by mass, 75 parts by mass, 70 parts by mass, 65 parts by mass, 60 parts by mass, 55 parts by mass, 50 parts by mass, 45 parts by mass, 40 parts by mass, 35 parts by mass, 30 parts by mass, 25 parts by mass, 20 parts by mass, 19 parts by mass, 17 parts by mass, 15 parts by mass, 13 parts by mass, 10 parts by mass, 9 parts by mass, 7 parts by mass, 5 parts by mass, 4 parts by mass, 2 parts by mass, 1 part by mass, 0 parts by mass, etc. In an embodiment, the content is preferably 0 parts by mass to 100 parts by mass.

### <Additive>

The power storage device binder aqueous solution may optionally include an agent that does not correspond to any of the above. The additive may be used alone or as a combination of two or more types.

Examples of the additive include a dispersant, a leveling agent, an antioxidant, an organic solvent, etc.

Examples of a dispersant include an anionic dispersant, a cationic dispersant, a nonionic dispersant, a polymeric dispersant, etc.

Examples of a leveling agent include a surfactant and the like.

Examples of a surfactant include an alkyl-based surfactant, a silicone-based surfactant, a fluorine-based surfactant, a metal-based surfactant, etc.

Examples of an antioxidant include phenol compound, hydroquinone compound, organic phosphorus compound, sulfur compound, phenylenediamine compound, polymer-type phenol compound, etc.

"Polymer-type phenol compound" refers to a polymer having a phenol structure. A weight average molecular weight (polymer-type phenol compound) is preferably 200 to 1000, and more preferably 600 to 700.

Examples of an organic solvent include an aromatic hydrocarbon solvent, a chlorinated hydrocarbon solvent, a lower alcohol solvent, a ketone solvent, an acetate ester solvent, a urea-based solvent, an alkoxy group-containing amide-based solvent, an ester group-containing amide-based solvent, etc. In an embodiment, examples of a mass% (total amount of urea-based solvent, alkoxy group-containing amide-based solvent, ester group-containing amide-based solvent/solvent) include less than 5 mass%, less than 2 mass%, less than 1 mass%, 0 mass%, etc.

Examples of a mass part content (additive/polyamic acid) include less than 5 parts by mass, less than 4 parts by mass, less than 2 parts by mass, less than 1 part by mass, less than 0.9 parts by mass, less than 0.5 parts by mass, less than 0.4 parts by mass, less than 0.2 parts by mass, less than 0.1 parts by mass, less than 0.09 parts by mass, less than 0.05 parts by mass, less than 0.04 parts by mass, less than 0.02 parts by mass, less than 0.01 parts by mass, 0 parts by mass, etc.

Examples of a mass% content (additive/power storage device binder aqueous solution) include less than 5 mass%, less than 4 mass%, less than 2 mass%, less than 1 mass%, less than 0.9 mass%, less than 0.5 mass%, less than 0.4 mass%, less than 0.2 mass%, less than 0.1 mass%, less than 0.09 mass%, less than 0.05 mass%, less than 0.04 mass%, less than 0.02 mass%, less than 0.01 mass%, 0 mass%, etc.

Examples of a pH (power storage device binder aqueous solution) include 9, 8.5, 8, 7.5, 7, 6.5, 6, etc. In an embodiment, the pH is preferably 6 to 9.

Measurement conditions (pH) include the following conditions.
Measurement instrument: product name "pH meter D-52" manufactured by HORIBA, Ltd.
Measurement temperature: 25°C

By mixing the above agents, the power storage device binder aqueous solution may be manufactured.

Examples of a mixing means include a ball mill, a sand mill, a pigment disperser, a grinding machine, an ultrasonic disperser, a homogenizer, a planetary mixer, a Hobart mixer, etc.

Examples of applications (power storage device binder aqueous solution) include a power storage device electrode binder aqueous solution, a battery electrode binder aqueous solution, a non-aqueous secondary battery electrode binder aqueous solution, a lithium ion battery electrode binder aqueous solution, a sodium ion battery electrode binder aqueous solution, a power storage device negative electrode binder aqueous solution, a battery negative electrode binder aqueous solution, a non-aqueous secondary battery negative electrode binder aqueous solution, a lithium ion battery negative electrode binder aqueous solution, a sodium ion battery negative electrode binder aqueous solution, a power storage device positive electrode binder aqueous solution, a battery positive electrode binder aqueous solution, a non-aqueous secondary battery positive electrode binder aqueous solution, a lithium ion battery positive electrode binder aqueous solution, a sodium ion battery positive electrode binder aqueous solution, a power storage device separator binder aqueous solution, a battery separator binder aqueous solution, a non-aqueous secondary battery separator binder aqueous solution, a lithium ion battery separator binder aqueous solution, a sodium ion battery separator binder aqueous solution, etc.

### [Power storage device slurry: slurry]

The disclosure relates to a power storage device slurry,
the power storage device slurry including a polyamic acid and water, and an electrode active material or a non-conductive particle, where
the polyamic acid includes an aliphatic diamine unit, and
the polyamic acid is an amine salt.

"Slurry" refers to a suspension of a liquid and solid particles.

Examples of the polyamic acid, the water, the other binder, the dispersion (emulsion), and the thickener include the above substances.

Examples of a mass% content (polyamic acid/slurry) include 10 mass%, 9 mass%, 8 mass%, 7 mass%, 6 mass%, 5 mass%, 4 mass%, 3 mass%, 2 mass%, 1 mass%, 0.9 mass%, 0.7 mass%, 0.5 mass%, 0.3 mass%, 0.1 mass%, etc. In an embodiment, the content is preferably 0.1 mass% to 10 mass%.

Examples of a mass% content (water/slurry) include 80 mass%, 75 mass%, 70 mass%, 65 mass%, 60 mass%, 55 mass%, 50 mass%, 45 mass%, 40 mass%, 35 mass%, 30 mass%, etc. In an embodiment, the content is preferably 30 mass% to 80 mass%.

Examples of a content (other binder), a content (dispersion (emulsion)), and a content (thickener) include the above contents and the like.

### <Electrode active material>

In an embodiment, the power storage device slurry includes an electrode active material. Examples of the electrode active material include a negative electrode active material and a positive electrode active material. The electrode active material may be used alone or as a combination of two or more types.

### (Negative electrode active material)

Examples of the negative electrode active material include carbon material, material that forms alloy with lithium, silicon material, lithium atom-containing oxide, etc.

Examples of carbon material include graphite, low crystallinity carbon, carbon black, fullerene, carbon nanotube, carbon nanofiber, carbon nanohorn, carbon fibril, mesocarbon microbeads (MCMB), pitch-based carbon fiber, activated carbon, etc.

Examples of graphite include natural graphite, artificial graphite, etc.

Examples of low crystallinity carbon include soft carbon, hard carbon, etc.

Examples of carbon black include Ketjen black, acetylene black, channel black, lamp black, oil furnace black, thermal black, etc.

Examples of material that forms alloy with lithium include lead compound, tin compound, arsenic compound, antimony compound, aluminum compound, etc.

Examples of silicon material include silicon, silicon oxide, silicon alloy, SiC, SiOₓC_{y} (0 < x ≤ 3, 0 < y ≤ 5), Si₃N₄, Si₂N₂O, SiO_{z} (0 < z ≤ 2), etc.

Silicon oxide is preferably silicon oxide represented by a compositional formula SiO_{z} (0 < z ≤ 2, preferably 0.1 ≤ z ≤ 1).

Examples of silicon alloy include silicon-titanium alloy, silicon-zirconium alloy, silicon-nickel alloy, silicon-copper alloy, silicon-iron alloy, silicon-molybdenum alloy, etc. In an embodiment, the silicon alloy is preferably silicon-nickel alloy and silicon-titanium alloy, and more preferably, silicon-titanium alloy.

A mol% content (silicon atoms/all metal elements) is preferably 10 mol% or more, and more preferably 20 mol% to 70 mol%.

A configuration of silicon material is, for example, single crystal, polycrystalline, amorphous, etc.

In the case where silicon material is used as the electrode active material, an electrode active material other than the silicon material may be used in combination.

Examples of an electrode active material other than the silicon material include carbon material, conductive polymer, composite metal oxide, etc.

Examples of conductive polymer include polyacene and the like.

The composite metal oxide is represented by, for example, the following general formula.

A_{α}B_{β}O_{γ}

(A represents an alkali metal or a transition metal. B represents at least one selected from transition metals such as cobalt, nickel, aluminum, tin, manganese, etc. O represents an oxygen atom. 0.05 < α < 1.10, 0.85 < β < 4.00, and 1.5 < γ < 5.00)

The carbon material has a small volume change associated with absorption and release of lithium. Thus, in the case of using silicon material as the electrode active material, it is preferable to use in combination with the carbon material.

In an embodiment, the silicon material is preferably silicon covered with a carbon layer, and silicon oxide covered with a carbon layer.

Examples of lithium atom-containing oxide includes lithium-transition metal composite oxide, lithium-transition metal phosphate compound, lithium-transition metal sulfate compound, etc.

Examples of lithium-transition metal composite oxide include lithium-manganese composite oxide, lithium-nickel composite oxide, lithium-cobalt composite oxide, lithium-iron composite oxide, lithium-titanium composite oxide, lithium-nickel-manganese composite oxide, lithium-nickel-cobalt composite oxide, etc.

In an embodiment, examples of a mass% content (carbon material and/or material that forms alloy with lithium/negative electrode active material) include 100 mass%, 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 5 mass%, 0 mass%, etc. In an embodiment, the content is preferably 50 mass% or more, more preferably 80 mass% or more, even more preferably 90 mass% or more, and particularly preferably 100 mass%.

In an embodiment, examples of a mass% content (silicon covered with carbon layer and/or silicon oxide covered with carbon layer/negative electrode active material) include 100 mass%, 90 mass% or more, 75 mass% or more, 50 mass% or more, 25 mass% or more, 10 mass% or more, 5 mass% or more, 2 mass% or more, 1 mass% or more, 0 mass%, etc.

In an embodiment, examples of a mass% content (silicon material/negative electrode active material) include 100 mass%, 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 5 mass%, 0 mass%, etc.

### (Positive electrode active material)

Examples of the positive electrode active material include a positive electrode inorganic active material, a positive electrode organic active material, etc.

Examples of a positive electrode inorganic active material include transition metal oxide, lithium-transition metal composite oxide, transition metal sulfide, activated carbon, etc.

The inorganic active material may have elements partially substituted. The inorganic active material may be used as an electrode active material covered with carbon material by causing a carbon source material to be present during reduction firing.

Examples of a positive electrode organic active material include conductive polymer and the like.

Examples of conductive polymer include polyacetylene, poly-p-phenylene, etc.

### (Physical properties and the like (electrode active material))

Examples of a form (electrode active material) include a fine particle form, a thin film form, etc.

An average particle diameter (electrode active material) is preferably 0.1 µm to 50 µm, more preferably 0.1 µm to 45 µm, even more preferably 1 µm to 10 µm, and particularly preferably 5 µm.

"Particle diameter" refers to a maximum distance among distances between any two points on an outline of a particle. "Average particle diameter" refers to a value calculated as an average value of particle diameters of particles observed in several to tens of fields using an observation means such as a scanning electron microscope (SEM) or a transmission electron microscope (TEM).

Examples of a mass part content (polyamic acid/electrode active material) include 15 parts by mass, 14 parts by mass, 13 parts by mass, 12 parts by mass, 11 parts by mass, 10 parts by mass, 9 parts by mass, 8 parts by mass, 7 parts by mass, 6 parts by mass, 5 parts by mass, 4 parts by mass, 3 parts by mass, 2 parts by mass, 1.5 parts by mass, 1 part by mass, 0.5 parts by mass, etc. In an embodiment, the content is preferably 0.5 parts by mass to 15 parts by mass.

### (Conductive auxiliary agent)

In an embodiment, the slurry may optionally include a conductive auxiliary agent. The conductive auxiliary agent may be used alone or as a combination of two or more types.

Examples of a conductive auxiliary agent include fibrous carbon, carbon black, metal fine powder, etc.

Examples of fibrous carbon include vapor grown carbon fiber (VGCF), carbon nanotube (CNT), carbon nanofiber (CNF), etc.

Examples of carbon black include graphite particles, acetylene black, Ketjen black, furnace black, etc.

Examples of metal fine powder include copper fine powder, nickel fine powder, aluminum fine powder, silicon fine powder, alloy fine powder, etc.

In an embodiment, an average particle diameter (metal fine powder) is preferably 10 µm.

A mass part content (conductive auxiliary agent/electrode active material) is preferably 0 to 10 parts by mass, and more preferably 0 parts by mass to 6 parts by mass.

### <Non-conductive particle>

In an embodiment, the power storage device slurry includes a non-conductive particle. The non-conductive particle may be used alone or as a combination of two or more types.

Examples of the non-conductive particle include an oxide particle, a nitride particle, a covalently bonded crystal particle, a sparingly soluble ionic crystal particle, a clay microparticle, etc.

Examples of an oxide particle include an aluminum oxide (alumina) particle, an aluminum oxide hydrate (boehmite (AlOOH)) particle, a gibbsite (Al(OH)₃) particle, a bakelite particle, an iron oxide particle, a silicon oxide particle, a magnesium oxide (magnesia) particle, a calcium oxide particle, a titanium oxide (titania) particle, a BaTiO₃ particle, a ZrO particle, an alumina-silica composite oxide particle, etc.

Examples of a nitride particle include an aluminum nitride particle, a silicon nitride particle, a boron nitride particle, etc.

Examples of a covalently bonded crystal particle include a silicon particle, a diamond particle, etc.

Examples of a sparingly soluble ionic crystal particle include a barium sulfate particle, a calcium fluoride particle, a barium fluoride particle, etc.

Examples of a clay microparticle include a silica clay microparticle, a talc clay microparticle, a montmorillonite clay microparticle, etc.

In an embodiment, the non-conductive particle is preferably a boehmite particle, an alumina particle, a magnesium oxide particle, and a barium sulfate particle.

Examples of an average particle diameter (non-conductive particle) include 30 µm, 25 µm, 20 µm, 15 µm, 10 µm, 5 µm, 1 µm, 0.5 µm, 0.1 µm, 0.05 µm, 0.01 µm, etc. In an embodiment, the average particle diameter is preferably 0.01 µm to 30 µm.

Examples of a mass% content (non-conductive particle/slurry) include 99.9 mass%, 95 mass%, 90 mass%, 80 mass%, 70 mass%, 60 mass%, 50 mass%, 40 mass%, 30 mass%, 20 mass%, 10 mass%, 5 mass%, 1 mass%, 0.5 mass%, 0.2 mass%, 0.1 mass%, etc. In an embodiment, the content is preferably 0.1 mass% to 99.9 mass%.

Examples of a mass part content (polyamic acid/non-conductive particle) include 15 parts by mass, 14 parts by mass, 13 parts by mass, 12 parts by mass, 11 parts by mass, 10 parts by mass, 9 parts by mass, 8 parts by mass, 7 parts by mass, 6 parts by mass, 5 parts by mass, 4 parts by mass, 3 parts by mass, 2 parts by mass, 1.5 parts by mass, 1 part by mass, etc. In an embodiment, the content is preferably 1 part by mass to 15 parts by mass, more preferably 1.5 parts by mass to 14 parts by mass, and even more preferably 2 parts by mass to 12 parts by mass.

### <Slurry viscosity adjustment solvent>

A slurry viscosity adjustment solvent may be used alone or as a combination of two or more types.

Examples of a slurry viscosity adjustment solvent include an amide solvent, a hydrocarbon solvent, an alcohol solvent, a ketone solvent, an ether solvent, an ester solvent, an amine solvent, a lactone solvent, a sulfoxide/sulfone solvent, water, etc.

Examples of an amide solvent include N-methylpyrrolidone, dimethylformamide, N,N-dimethylacetamide, etc.

Examples of a hydrocarbon solvent include toluene, xylene, n-dodecane, tetralin, etc.

Examples of an alcohol solvent include methanol, ethanol, 2-propanol, isopropyl alcohol, 2-ethyl-1-hexanol, 1-nonanol, lauryl alcohol, etc.

Examples of a ketone solvent include acetone, methyl ethyl ketone, cyclohexanone, phorone, acetophenone, isophorone, etc.

Examples of an ether solvent include dioxane, tetrahydrofuran (THF), etc.

Examples of an ester solvent include benzyl acetate, isopentyl butyrate, methyl lactate, ethyl lactate, butyl lactate, etc.

Examples of an amine solvent include o-toluidine, m-toluidine, p-toluidine, etc.

Examples of a lactone solvent include γ-butyrolactone, δ-butyrolactone, etc.

Examples of a sulfoxide/sulfone solvent include dimethyl sulfoxide, sulfolane, etc.

In an embodiment, the slurry viscosity adjustment solvent is preferably N-methylpyrrolidone.

Examples of a mass% content (slurry viscosity adjustment solvent/slurry) include 10 mass%, 9 mass%, 8 mass%, 7 mass%, 6 mass%, 5 mass%, 4 mass%, 3 mass%, 2 mass%, 1 mass%, 0 mass%, etc. In an embodiment, the content is preferably 0 to 10 mass%.

### <Slurry additive>

The slurry may optionally include an agent (slurry additive) that does not correspond to any of the above. Examples of the slurry additive include the above agents and the like.

Examples of a mass% content (slurry additive/slurry) include 0 mass% to 5 mass%, less than 1 mass%, less than 0.1 mass%, less than 0.01 mass%, 0 mass%, etc.

Examples of a mass part content (slurry additive/polyamic acid), a mass part content (slurry additive/water), a mass part content (slurry additive/other binder), a mass part content (slurry additive/dispersion (emulsion)), a mass part content (slurry additive/thickener), a mass part content (slurry additive/electrode active material), a mass part content (slurry additive/non-conductive particle), and a mass part content (slurry additive/slurry viscosity adjustment solvent) include 0 parts by mass to 5 parts by mass, less than 1 part by mass, less than 0.1 parts by mass, less than 0.01 parts by mass, 0 parts by mass, etc.

The slurry may be manufactured by mixing the above agents.

Examples of a mixing means include the above apparatuses and the like.

Examples of applications (power storage device slurry) include a power storage device electrode slurry, a battery electrode slurry, a non-aqueous secondary battery electrode slurry, a lithium ion battery electrode slurry, a sodium ion battery electrode slurry, a power storage device negative electrode slurry, a battery negative electrode slurry, a non-aqueous secondary battery negative electrode slurry, a lithium ion battery negative electrode slurry, a sodium ion battery negative electrode slurry, a power storage device positive electrode slurry, a battery positive electrode slurry, a non-aqueous secondary battery positive electrode slurry, a lithium ion battery positive electrode slurry, a sodium ion battery positive electrode slurry, a power storage device separator slurry, a battery separator slurry, a non-aqueous secondary battery separator slurry, a lithium ion battery separator slurry, a sodium ion battery separator slurry, etc.

### [Power storage device electrode: electrode]

The disclosure relates to a power storage device electrode having a dried product of the above power storage device slurry on a current collector.

The power storage device electrode is obtained by applying the power storage device slurry to a current collector and drying it.

Examples of a current collector include metal material, carbon material, etc.

Examples of metal material include copper, iron, aluminum, nickel, stainless steel, nickel-plated steel, etc.

Examples of a form of the metal material include a metal foil, a metal cylinder, a metal coil, a metal plate, etc.

Examples of carbon material include carbon cloth, carbon paper, etc.

Examples of a form (carbon material) include a carbon plate, a carbon thin film, a carbon cylinder, etc.

Examples of an application means include a comma coater, a gravure coater, a micro-gravure coater, a die coater, a bar coater, etc.

A drying temperature is preferably 60°C to 200°C, and more preferably 100°C to 195°C.

Examples of a drying atmosphere include dry air, inert atmosphere, etc.

A thickness (electrode (cured product)) is preferably 5 µm to 300 µm, and more preferably 10 µm to 250 µm.

Examples of applications (power storage device electrode) include a power storage device positive electrode, a power storage device negative electrode, a battery electrode, a battery positive electrode, a battery negative electrode, a non-aqueous secondary battery electrode, a non-aqueous secondary battery positive electrode, a non-aqueous secondary battery negative electrode, a lithium ion battery electrode, a lithium ion battery positive electrode, a lithium ion battery negative electrode, a sodium ion battery electrode, a sodium ion battery positive electrode, a sodium ion battery negative electrode, etc.

### [Power storage device separator: separator]

The disclosure relates to a power storage device separator having a dried product of the above power storage device slurry on a base material.

Manufacturing (power storage device separator) may be performed by applying the power storage device separator slurry to one side or both sides of a base material and drying it.

Examples of a base material include a porous polyolefin resin base material, a plastic nonwoven fabric, etc.

### (Porous polyolefin resin base material)

"Porous polyolefin resin base material" refers to a fine porous film containing 30 mass% or more of a resin of polyolefin, a mixture or a copolymer thereof, etc.

The polyolefin resin may be used alone or as a combination of two or more types. Examples of the polyolefin resin include homopolymers, copolymers, etc. of ethylene, propylene, 1-butene, 4-methyl-1-pentene, 1-hexene, 1-octene, etc.

Examples of a stereochemical structure (polyolefin) include an isotactic structure, a syndiotactic structure, an atactic structure, etc.

In an embodiment, the polyolefin resin is preferably high-density polyethylene, and more preferably high-density polyethylene and polypropylene.

In an embodiment, a mass% content (polyolefin resin/base material) is preferably 30 mass% to 100 mass%, more preferably 40 mass% to 100 mass%, and even more preferably 50 mass% to 100 mass%.

The porous polyolefin resin base material may optionally include a filler and a fibrous compound. The strength, hardness, and thermal shrinkage rate of the porous polyolefin resin base material may be controlled by the filler and the fibrous compound.

The porous polyolefin resin base material may be subjected to a surface treatment as needed.

Examples of a surface treatment include a coating treatment, an electromagnetic radiation treatment, a plasma treatment, etc.

In an embodiment, the surface treatment is preferably a coating treatment with a polar group-containing polymer. By the coating treatment, electrolytic solution impregnation properties and adhesion with the dried product of the slurry may be enhanced. Examples of a polar group include carboxylic acid group, hydroxyl group, sulfonic acid group, etc.

In an embodiment, a thickness (porous polyolefin resin base material) is preferably 2 µm to 100 µm, and more preferably 5 µm to 50 µm.

### (Plastic nonwoven fabric)

Examples of the plastic nonwoven fabric include a nonwoven fabric composed only of a synthetic fiber and the like.

Examples of a synthetic fiber include polyolefin-based resin, polyester-based resin, acrylonitrile-based resin, polyamide-based resin, polyvinyl acetate-based resin, ethylene-vinyl acetate copolymer resin, acrylic resin, polyvinyl chloride-based resin, polyvinylidene chloride-based resin, polyvinyl ether-based resin, polyvinyl ketone-based resin, polyether-based resin, polyvinyl alcohol-based resin, diene-based resin, polyurethane-based resin, phenol-based resin, melamine-based resin, furan-based resin, urea-based resin, aniline-based resin, unsaturated polyester-based resin, alkyd-based resin, fluorine-based resin, silicone-based resin, polyamideimide-based resin, polyphenylene sulfide-based resin, polyimide-based resin, polycarbonate-based resin, polyazomethine-based resin, polyesteramide resin, polyether ether ketone-based resin, poly-p-phenylene benzobisoxazole resin, polybenzimidazole-based resin, ethylene-vinyl alcohol copolymer-based resin.

Examples of polyolefin-based resin include polypropylene, polyethylene, polymethylpentene, ethylene-vinyl alcohol copolymer, olefin-based copolymer, etc.

Examples of polyester-based resin include polyethylene terephthalate (PET)-based resin, polybutylene terephthalate (PBT)-based resin, polytrimethylene terephthalate (PTT)-based resin, polyethylene naphthalate (PEN)-based resin, polybutylene naphthalate-based resin, polyethylene isophthalate-based resin, wholly aromatic polyester-based resin, etc.

Examples of acrylonitrile-based resin include polyacrylonitrile, copolymer of acrylonitrile with (meth)acrylic acid derivative, vinyl acetate, etc.

Examples of polyamide-based resin include aliphatic polyamide, wholly aromatic polyamide, semi-aromatic polyamide, etc.

Examples of aliphatic polyamide include nylon and the like.

Examples of wholly aromatic polyamide include poly-p-phenylene terephthalamide, poly-p-phenylene terephthalamide-3,4-diphenyl ether terephthalamide, poly-m-phenylene isophthalamide, etc.

"Semi-aromatic polyamide" refers to polyimide in which a part of the main chain of aromatic polyamide is an aliphatic chain.

The plastic nonwoven fabric fiber may optionally include a fiber other than the synthetic resin fiber.

Examples of a fiber other than the synthetic resin fiber include solvent-spun cellulose, fibrillated solvent-spun cellulose, regenerated cellulose, fibrillated regenerated cellulose, natural cellulose fiber, pulped natural cellulose fiber, fibrillated natural cellulose fiber, inorganic fiber, etc.

A mass% content (fiber other than synthetic fiber/nonwoven fabric) is preferably 50 mass% or less, more preferably 30 mass% or less, and even more preferably 10 mass% or less.

Examples of a form (form) include single fiber, composite fiber, etc.

"Single fiber" refers to a fiber composed of a single resin. "Composite fiber" refers to a fiber composed of two or more types of resins.

Examples of a form (composite fiber) include a core-sheath type, an eccentric type, a side-by-side type, an islands-in-sea type, an orange type, a multiple bimetal type, etc.

In an embodiment, an average fiber diameter (plastic nonwoven fabric) is preferably 1 µm to 15 µm, and more preferably 1 µm to 10 µm.

"Average fiber diameter" refers to an average value of the fiber diameter of 20 fibers randomly selected from a scanning electron microscope photograph.

In an embodiment, an average pore diameter (plastic nonwoven fabric) is preferably 1 µm to 20 µm, more preferably 3 µm to 20 µm, and even more preferably 5 µm to 20 µm.

"Pore diameter" refers to a width of gaps between fibers. "Average pore diameter" refers to an average value of the pore diameters of 20 fibers randomly selected from a scanning electron microscope photograph.

In an embodiment, a thickness (plastic nonwoven fabric) is preferably 5 µm to 25 µm, and more preferably 5 µm to 15 µm.

### <Manufacturing method (power storage device separator)>

A manufacturing method (power storage device separator) may be, for example, a method including a coating process of coating the power storage device separator slurry on a base material, and a drying process of drying the coated power storage device separator slurry.

### (Coating process)

Examples of a coating method include coating, printing, transferring, immersion, etc.

Examples of coating include blade coating, rod coating, reverse roll coating, lip coating, die coating, curtain coating, air knife coating, etc.

Examples of printing include flexographic printing, screen printing, offset printing, gravure printing, inkjet printing, etc.

Examples of transferring include roll transferring, film transferring, etc.

Examples of immersion include dipping and the like.

### (Drying process)

Examples of a drying method include air drying, irradiation drying, vacuum drying, etc.

Examples of air drying include warm air drying, hot air drying, low humidity air drying, etc.

Examples of irradiation drying include infrared irradiation drying, far-infrared irradiation drying, electron beam irradiation drying, etc.

A drying temperature is preferably 40°C to 90°C, and more preferably 50°C to 80°C.

A drying time is preferably 5 seconds to 3 minutes, and more preferably 15 seconds to 2 minutes.

The manufacturing method (power storage device separator) may optionally include a pressing process.

Examples of a pressing means include a die press, a roll press, etc.

Examples of applications (power storage device separator) include a battery separator, a non-aqueous secondary battery separator, a lithium ion battery separator, a sodium ion battery separator, etc.

### [Power storage device separator/electrode laminate]

The disclosure relates to a power storage device separator/electrode laminate having a dried product of the above power storage device slurry on an active material side of an electrode.

The power storage device separator/electrode laminate is obtained by applying the power storage device slurry to an electrode and drying it.

A manufacturing method (power storage device separator/electrode laminate) may be a method including the following processes.
(1) A process of applying an electrode material-containing slurry to a current collector
(2) A process of drying the electrode material-containing slurry
(3) A process of pressing a dried product of the electrode material-containing slurry
(4) A process of applying a power storage device separator slurry to the dried product of the electrode material-containing slurry
(5) A process of drying the power storage device separator slurry

Examples of an application method, a drying method, and a pressing method include the methods described above.

Examples of applications (power storage device separator/electrode laminate) include a battery separator/electrode laminate, a battery separator/negative electrode laminate, a battery separator/positive electrode laminate, a non-aqueous secondary battery separator/electrode laminate, a non-aqueous secondary battery separator/negative electrode laminate, a non-aqueous secondary battery separator/positive electrode laminate, a lithium ion battery separator/electrode laminate, a lithium ion battery separator/negative electrode laminate, a lithium ion battery separator/positive electrode laminate, a sodium ion battery separator/electrode laminate, a sodium ion battery separator/negative electrode laminate, a sodium ion battery separator/positive electrode laminate, etc.

### [Power storage device]

The disclosure relates to a power storage device.

In an embodiment, the power storage device includes the above power storage device electrode.

In an embodiment, the power storage device includes the above power storage device separator.

In an embodiment, the power storage device includes the above power storage device separator/electrode laminate.

### (Electrolytic solution)

The power storage device may optionally include an electrolytic solution. Examples of an electrolytic solution include a solution in which a supporting electrolyte is dissolved in a non-aqueous solvent.

The non-aqueous solvent may be used alone or as a combination of two or more types.

Examples of the non-aqueous solvent include a chain carbonate solvent, a cyclic carbonate solvent, a chain ether solvent, a cyclic ether solvent, a chain ester solvent, a cyclic ester solvent, acetonitrile, etc.

Examples of a chain carbonate solvent include diethyl carbonate, dimethyl carbonate, ethyl methyl carbonate, etc.

Examples of a cyclic carbonate solvent include ethylene carbonate, propylene carbonate, butylene carbonate, etc.

Examples of a chain ether solvent include 1,2-dimethoxyethane and the like.

Examples of a cyclic ether solvent include tetrahydrofuran, 2-methyltetrahydrofuran, sulfolane, 1,3-dioxolane, etc.

Examples of a chain ester solvent include methyl formate, methyl acetate, methyl propionate, etc.

Examples of a cyclic ester solvent include γ-butyrolactone, γ-valerolactone, etc.

In an embodiment, the non-aqueous solvent is preferably a combination of cyclic carbonate and chain carbonate.

The supporting electrolyte may be used alone or as a combination of two or more types.

Examples of the supporting electrolyte include lithium salt and the like. Examples of lithium salt include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, (C₂F₅SO₂)NLi, etc. In an embodiment, the supporting electrolyte is preferably LiPF₆, LiClO₄, and CF₃SO₃Li.

In an embodiment, the non-aqueous electrolytic solution may optionally include a film-forming agent. The film-forming agent may be used alone or as a combination of two or more types.

Examples of the film-forming agent include carbonate, alkene sulfide, sultone, acid anhydride, etc.

Examples of carbonate include vinylene carbonate, vinyl ethylene carbonate, vinyl ethyl carbonate, methyl phenyl carbonate, fluoroethylene carbonate, difluoroethylene carbonate, etc.

Examples of alkene sulfide include ethylene sulfide, propylene sulfide, etc.

Examples of sultone include 1,3-propane sultone, 1,4-butane sultone, etc.

Examples of acid anhydride include maleic anhydride, succinic anhydride, etc.

In an embodiment, a mass% content (film-forming agent/electrolytic solution) is preferably 10 mass% or less, more preferably 8 mass% or less, even more preferably 5 mass% or less, and particularly preferably 2 mass% or less.

Examples of a form (power storage device) include a cylinder type in which sheet electrodes and separators are configured in a spiral shape, a cylinder type with an inside-out structure combining pellet electrodes and separators, a coin type in which pellet electrodes and separators are laminated, etc.

Examples of the manufacturing method (power storage device) include methods described in Japanese Patent Application Laid-Open No. 2013-089437, and the like.

Examples of applications (power storage device) include a battery, a non-aqueous secondary battery, a lithium ion battery, a sodium ion battery, etc.

### Examples

The present invention will be specifically described through Examples and Comparative Examples below. However, the above description and Examples below are not described for the purpose of limiting the present invention. The present invention is limited only by the scope of the claims. Unless otherwise specified below, numerical values such as parts, %, etc. are on a mass basis.

### Example 1

To a glass reaction vessel (internal volume 500 mL) equipped with a stirrer and nitrogen gas introduction and discharge tubes, 153 g of water, 69.2 g of DMEA (1.25 equivalents relative to carboxyl group), 35.32 g of 1,3-BAC (0.248 mol), and 8.14 g of IBPA (0.062 mol) were added and stirred at 25°C for 5 minutes to dissolve. To this solution, 100 g of BTDA (0.31 mol) was added and stirred at 70°C for 6 hours to obtain a polyamic acid aqueous solution (non-volatile content concentration 34.9 mass%, solution viscosity 918 mPa·s).

Unless otherwise specified, other examples were performed in the same manner as the above except for the changes shown in the table below.

**[Table 1]**

| | Acid anhydride | | | Diamine | | | | | Amine salt | Coatability | Adhesion |
|---|---|---|---|---|---|---|---|---|---|---|---|
| | BTDA (mol%) | BPDA (mol%) | 6FDA (mol%) | 1,3-BAC (mol%) | HMDA (mol%) | IBPA (mol%) | MPDA (mol%) | 4,4-DPE (mol%) | | | |
| Example 1 | 100 | | | 80 | | 20 | | | DMEA | ○ | ○ |
| Example 2 | 100 | | | 100 | | | | | N100 | ○ | ○ |
| Example 3 | 100 | | | 100 | | | | | TMEDA | ○ | ○ |
| Example 4 | 100 | | | 50 | | | 50 | | DMZ | ○ | ○ |
| Example 5 | 100 | | | 50 | | | 50 | | DMEA | ○ | ○ |
| Example 6 | 100 | | | | 30 | | 70 | | DMEA | ○ | ○ |
| Comparative Example 1 | | 100 | | | | | | 100 | DMZ | × | ○ |
| Comparative Example 2 | | | 100 | | | | | 100 | DMZ | × | - |
| Comparative Example 3 | PVDF | | | | | | | | | ○ | × |
| Comparative Example 4 | SBR/CMC | | | | | | | | | × | ○ |

| | | | | | | | | | | | |
|---|---|---|---|---|---|---|---|---|---|---|---|
| "Mol% (acid anhydride)" refers to a value with respect to 100 mol% of acid anhydride. "Mol% (diamine)" refers to a value with respect to 100 mol% of diamine. BTDA: 3,3',4,4'-benzophenone tetracarboxylic acid dianhydride, product name "BTDA-PF", manufactured by Evonik Japan Co., Ltd. BPDA: 3,3',4,4'-biphenyl tetracarboxylic acid dianhydride, product name "BPDA", manufactured by Mitsubishi Chemical Corporation 6FDA: 2,2-bis(3,4-dicarboxyphenyl)hexafluoropropane dianhydride, product name "6FDA", manufactured by Daikin Industries, Ltd. 1,3-BAC: 1,3-bisaminomethylcyclohexane, product name "1,3-BAC", manufactured by Mitsubishi Gas Chemical Company, Inc. IBPA: 3,3'-diaminodipropylamine, manufactured by Koei Chemical Co., Ltd. HMDA: hexamethylenediamine, manufactured by INVISTA MPDA: m-phenylenediamine, manufactured by Sigma-Aldrich 4,4-DPE: 4,4'-diaminodiphenyl ether, manufactured by Seika Corporation DMEA: 2-(dimethylamino)ethanol, manufactured by Nippon Nyukazai Co., Ltd. N100: N,N-dimethylcyclohexylamine, product name "Lupragen N100", manufactured by BASF TMEDA: tetramethylethylenediamine, manufactured by Koei Chemical Co., Ltd. DMZ: 1,2-dimethylimidazole, manufactured by Shikoku Chemicals Corporation | | | | | | | | | | | |

### <Coatability>

Using an applicator, the power storage device binder aqueous solution was coated on a current collector copper foil.

### (Evaluation criteria)

∘: No coating streaks or smearing occur. And no aggregates are present.
×: Coating streaks or smearing occur. Or aggregates are present.

### <Adhesion>

The power storage device binder aqueous solution was applied on a glass plate of base material using an applicator. The coating film was placed in a hot air dryer under normal pressure and subjected to heat treatment at 80°C for 10 minutes, at 120°C for 20 minutes, and at 200°C for 30 minutes under reduced pressure, to manufacture a polyimide film (dried product) with a thickness of 10 µm. Subsequently, a cross-cut peel test was performed on the polyimide film.
Cross-cut preparation means: cutter knife
Number of cross-cuts: 100 squares
Cross-cut size: 1 mm × 1 mm
Adhesive tape: product name "Cellotape (registered trademark)", manufactured by Nichiban Co., Ltd.
Peel direction: vertical direction

### (Evaluation criteria)

∘: Number of peeled squares being 9 or less
×: Number of peeled squares being 10 or more

## Claims

1. A power storage device binder aqueous solution comprising a polyamic acid and water, wherein
the polyamic acid comprises an aliphatic diamine unit, and
the polyamic acid is an amine salt.

2. The power storage device binder aqueous solution according to claim 1, wherein the polyamic acid comprises a polyamine unit.

3. A power storage device slurry comprising a polyamic acid and water, and an electrode active material or a non-conductive particle, wherein
the polyamic acid comprises an aliphatic diamine unit, and
the polyamic acid is an amine salt.

4. A power storage device electrode comprising a dried product of the power storage device slurry according to claim 3 on a current collector.

5. A power storage device separator comprising a dried product of the power storage device slurry according to claim 3 on a base material.

6. A power storage device separator/electrode laminate comprising a dried product of the power storage device slurry according to claim 3 on an active material side of an electrode.

7. A power storage device comprising one or more selected from the group consisting of:
the power storage device electrode according to claim 4;
the power storage device separator according to claim 5; and
the power storage device separator/electrode laminate according to claim 6.
